# EUROPEAN PATENT APPLICATION

(11) **EP 1 978 765 A1**
(43) Date of publication of application: **08.10.2008**
(21) Application number: 07251470.6
(22) Date of filing: 02.04.2007
(51) Int. Cl.: H04Q 7/32

(54) **Power management scheme for mobile communication devices**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

A method of power management for a communications device comprising a plurality of sub-systems, one or more of said sub-systems being interfaced with in real-time by a communications application which controls the communication of data packets sent to and from the communications device, the method comprising: determining timing information the communications application when performing one or more activities during the operation of the communications application; and controlling the operation of each of said sub-system in real-time to synchronise the time of activity of each of said sub-systems with the time of activity of said communications application when performing said one or more activities.

## Description

The present invention relates to a method of power management scheme for communication devices, in particular, but not exclusively to a method of power management for mobile communication devices arranged to implement real-time streamed communication, for example, such as a Voice over Internet Protocol (VoIP) communication service.

As VolP becomes a reality on mobile devices the usability of the service is becoming an issue where limited talk and standby times are present due to the amount of power drawn from the device battery (when compared with GSM). Mobile VolP generally uses Wi-Fi as its transport as this gives practical mix of range and bandwidth, but in general the radio system design and implementation has not given priority to power consumption.

Although the some of Wi-Fi protocol variants have facilities to use power save modes these are not mandatory so there is no guarantee that a given device and access point have them implemented. Therefore relying on this chaotic environment to provide optimal RF power is not possible. Further, whilst power efficiency of the radio layer will produce longer talk times, it does not cover power optimisation on the rest of the device during a call namely CPU and display management. These three components are the main areas of power consumption for mobile devices, and with many modern mobile CPU designs having scalable operation, providing the correct balance between speed and current drawn is important.

Whilst modern mobile devices have some form of power management for the CPU levelled against the load and the display normally has some minimal control, this is not always optimal.

The invention seeks to obviate and/or mitigate the above limitations of the prior art by providing a method of power management for communication devices which support applications, such as VolP, where the exact device resources can be determined. This enables more optimal power management to be potentially achieved by direct application control over a plurality of component sub-systems of the communication device, for example, the sub-systems comprising the radio, computer processing unit (CPU) and display.

According, the invention seeks to enhance the control exercised by a VolP application hosted on a mobile communication device (for example, a mobile telephony handset, personal digital assistant, or other any type of communications device which operates using wireless connectivity and which requires an internal power source (i.e., which isn't permanently powered by a mains electricity source) to optimise the radio layer, CPU and display.

The power management scheme enables the VoIP application to provide the effective control of a plurality of sub-systems which it can control due to the VolP application needing to interface with such sub-systems of the control and data planes during a the VoIP call. This enables a VoIP application to use the data it receives from call set up and runtime operations to co-ordinate power saving for the radio, CPU and display.

The aspects and preferred features of the invention are as described by the accompanying independent and dependent claims respectively, and may be combined in any appropriate manner apparent to those skilled in the art.

In a preferred embodiment, the invention is provided as a software client using a radio system such as, for example, a software based Wi-Fi client. In alternative embodiments, the same scheme is readily applied to a hardware-based implementation using any radio system.

Preferred embodiments of the invention will now be described with reference to the accompanying drawings which are by way of example only, and in which:
Figure 1A shows schematically selective sub-systems of a communication device known in the art;
Figure 1B shows an exemplary mobile VolP client as known in the prior art;
Figure 2 shows the synchronisation of the CPU and Radio sub-systems according to an embodiment of the invention; and
Figure 3 shows steps in a power management method according to an embodiment of the invention.

In the following description, for purposes of explanation, numerous specific details are set forth in order to provide a thorough understanding of the present invention. It will be evident, however, to one of ordinary skill in the art, that the present invention may be practiced without these specific details. In other instances, well-known structures and devices are shown in simplified diagrammatic form to facilitate explanation and additional detail known to one of ordinary skill in the art has been omitted for clarity. The description of preferred embodiments is not intended to limit the scope of the claims appended hereto.

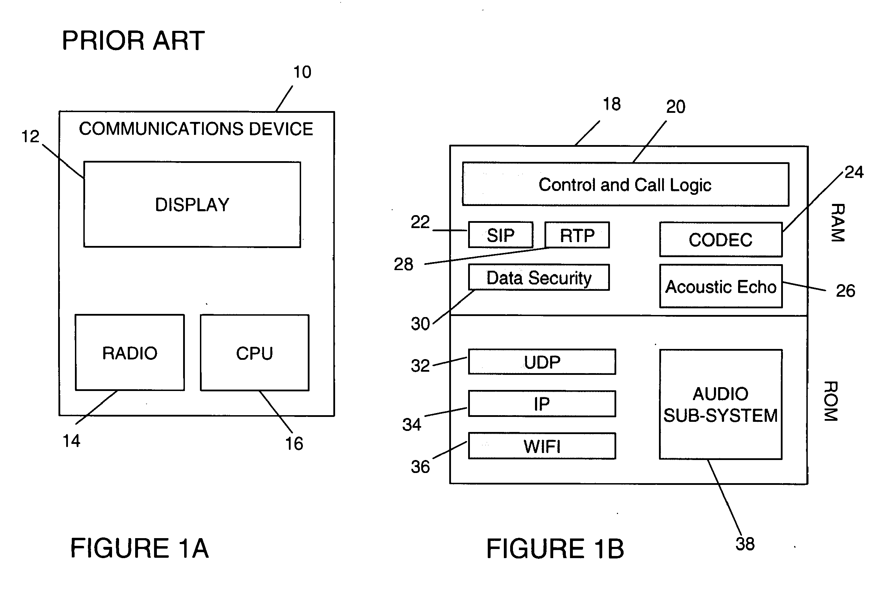

Figure 1A of the accompanying drawings shows a prior art communication device 10 comprising a plurality of sub-systems including but not limited to a display sub-system 12, a processing sub-system (CPU 16), and a radio sub-system 14 (which comprises, for example, at least a transceiver component or transmitter/receiver component pair) which are used by a communications application 18, such as a voice over internet protocol (VolP) application. As those of ordinary skill in the art will appreciate a number of other sub-systems are provided on such devices, for example, an operating sub-system, audio transceiver equipment such as earpieces/microphone/loudspeakers etc. Examples of a communication device 10 for which a power management scheme according to the invention can be implemented include a mobile telephony handset or laptop computer or other communication-enabled device having equivalent sub-systems to those shown). Nonetheless, the invention enables any communications device to implement a power saving operations mode regardless of whether the communication occurs over a wired or wireless connection.

Figure 1B shows in more detail the components (a term used equivalently herein to sub-systems) of a communication application 18 such as Voice over IP (VolP) client application , which is implemented in software (i.e., using software to control reconfigurable hardware). The communication application 18 comprises a number of random access memory (RAM) and read-only memory (ROM) components as shown in Figure 1, whose functions are well known to those of ordinary skill in the art. Briefly, in one embodiment where the communications application 18 comprises a VolP client , control is achieved by the call logic component 20 dealing with messages to and from the SIP stack component 22 and the RTP stack 28. The sip stack is used during call setup whereas call runtime information for the packets arriving at the communications device is required by the VolP client and this is obtained by the RTP stack 28.. Part of this dialog is the negotiation for which codec the codec component 24 is to use within the context of a call. The codec to be used is in some cases re-negotiated on a regular basis, and so is not fixed and has the potential to change either during a call and/or between calls. The codec type determines its complexity and hence the amount of CPU cycles that CPU sub-system 16 needs to process each voice frame (or packet) transmitted or received by the radio sub-system 14.

The CPU 16 must be configured to be capable of adapting to different codecs, as well as adapting to varying processor loading (such as occurs if, for example, virtual private networking (VPN) is used via the data security layer 30) and to the processing used for the echo cancellation by acoustic echo cancellation component 26. The call state information is also known from the SIP dialog and so can be used to control the display sub-system 12 of the communication device 10. Once the call is established the audio data streams will sent/received from the real-time transport protocol (RTP) component 28. In Figure 1B, the control and call logic 20, the SIP and RTP stacks 22,28, data security component 30, and CODEC component 24 and acoustic echo cancellation (AEC) component 26 are all implemented in random access memory (RAM) by the VolP application. In addition, however, an audio sub-system component 38, an Internet Protocol component 34, a Wireless Fidelity (also known as Wi-Fi or ITU 802.11b standard protocol) component 36, and a Universal Datagram Protocol component 32 are shown as implemented in read-only memory. Those of ordinary skill in the art will be aware that the form of memory which is shown in Figure 1B to implement the features of the communications application 18 is indicated for exemplary purposes only and that other sub-systems not shown may also be present and that equivalent sub-systems, for example, variants of the ITU 802.11x standard wireless communications protocol family such as Wi-Max etc) may be provided in alternative embodiments of a communications device implementing a power management scheme according to the invention.

The rate at which data is received by the communication device 10 is determined by the remote end of any connection or intermediate network nodes (e.g. gateways), but a typical expected rate under normal network conditions is for an audio packet to be received every 20ms. Aside from any jitter, this packet interval duration is assumed to be fixed for the duration of a particular call established by the communication device with another entity. When the call is set up the VolP application and a network based SIP server exchange codec capabilities and an initial codec for use during the call is agreed. However, once the call is up and running, the VolP application and the network SIP server can repeat the process for a variety of reasons and so any change of codec must be taken into account. Knowing this packet interval and the codec type allows the radio sub-system 14 and processing sub-system 16 to be dimensioned whilst the call state can be used to set the appropriate display level for the display sub-system 12.

It is assumed here that if the communication device is used on a voice call, the user will not be engaged on any other activity so reducing the network and CPU performance is acceptable.

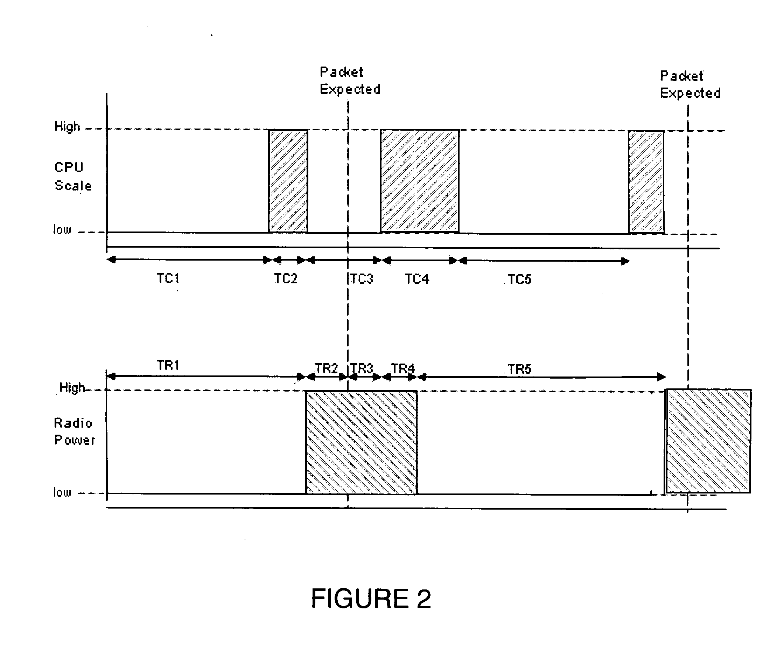

To implement a method of power management according to an embodiment of the invention, the communication application 18 controls the radio-subsystem 14 to enable transmission of data packets with the same intervals of time as incoming data packet stream are received from the remote end of any communication link. This control by the communication application enables synchronization between the transmission and receiving modes of operation of the radio-subsystem 14 of the communication device 10 and enables the radio sub-system 14 to be turned into an low power state outside of this general transmission/reception time interval. This means that the radio-subsystem adopts a low power mode outside the transmitting/receiving time periods. The communication application 18 also controls the active periods of the main processing subsystem CPU 16 of the communication device 10 to at least partially coincide with the active time periods of the radio-subsystem. This is shown in Figure 2, where the CPU encodes an outgoing packet, decodes a received packed and performs echo cancellation using the acoustic echo cancellation component 26 shown in Figure 1B in synchrony with the transmitting/receiving time periods of the radio-sub-system. This means that the active periods of the processing subsystem 16 are synchronised with the active periods of the radio-subsystem. This activity and the synchronization between the processing sub-system 16 and the radio sub-system 14 is shown in Figure 2.

The upper part of Figure 2 shows schematically how the high and low activity levels of a processing sub-system (shown as a CPU scale) and the lower part of Figure 2 shows the high and low activity levels of the radio sub-system 14 of the communications device 10. The high level for the processing sub-system is whatever level is appropriate for the CPU operating frequency to match the codec being employed within a particular communication, or call. In some embodiments this includes the setting of core voltage and memory frequency, within the required time period. In some embodiments, a higher frequency for a shorter period is more power efficient than a lower setting for a longer period, in other embodiments other configurations are provided. The radio power activity levels shown in the lower part of Figure 2 similarly represent as a high and low level a level appropriate for transmission and reception and the idle state. These may be determined by the communication application 18 or by other means.

In Figure 2, hatched (shaded) areas denote the sections where high power is being used, and various time periods are shown. The time periods are used by the method according to an embodiment of the invention for synchronization and are described below:
**TC1** - A low power period of the CPU.
**TC2** - The CPU is switched to 'high' to encode an amount of audio data ready for transmission.
**TC3** - The CPU is switched to 'low' again pending the arrival and decode of incoming audio packet.
**TC4** - The CPU is switched to 'high' to decode the incoming audio packet, this period also includes time for the echo canceller to run. This period can be swapped to TC3 if a particular canceller runs in the encoding period.
**TC5** - A low power period of the CPU, prior to cycle repeat.
**TR1**- A low power period of the radio.
**TR2** - Transmitting the encoded packet.
**TR3** - The earliest period expected (including jitter) for the incoming packet.
**TR4** - Receiving the audio packet.
**TR5** - A low power period of the radio

Initially the radio and CPU will have to run with their default values until the communication application has received a few incoming packets and successfully determined the packetisation rate for the call, at this point the method of power management is capable of being implemented according to the invention.

In one embodiment of a power management method according to the invention, if a number of incoming packets are 'missed', default values are applied and a learning period initiated. This embodiment is suitable for a communications device to adapt to an environment where poor reception is likely to be experienced.

In one embodiment of the invention, a complex codec can be used (as determined by the SIP re/negotiation) which employs Voice Activity Detection (VAD). This could result in no data being received in an expected packet reception interval. The power management scheme is able to determine if such an exception condition has occurred (i.e., if no packets have been generated due to no voice activity) and can recover from them as although VAD can result in 'breaks' in the regular packet transmission the invention relies upon, the presence of VAD is known from the codec negotiation phase and the invention can adapt to its presence.

Nonetheless, the radio sub-system needs to be active for the appropriate period (TR4) just in case a speech packet is received. One embodiment does not then require a re-learning period to be invoked. In another embodiment, however, a re-learning period is combined with packet drop to ensure synchronisation, resulting in, for example, a re-learning period being used after a number of 'missed packets, to ensure synchronisation. As shown in Figure 2, on the transmission side the radio sub-system adopts an low power state for the TR2 period, and if the VAD information on the outgoing stream requires no CPU, TC2 can be omitted.

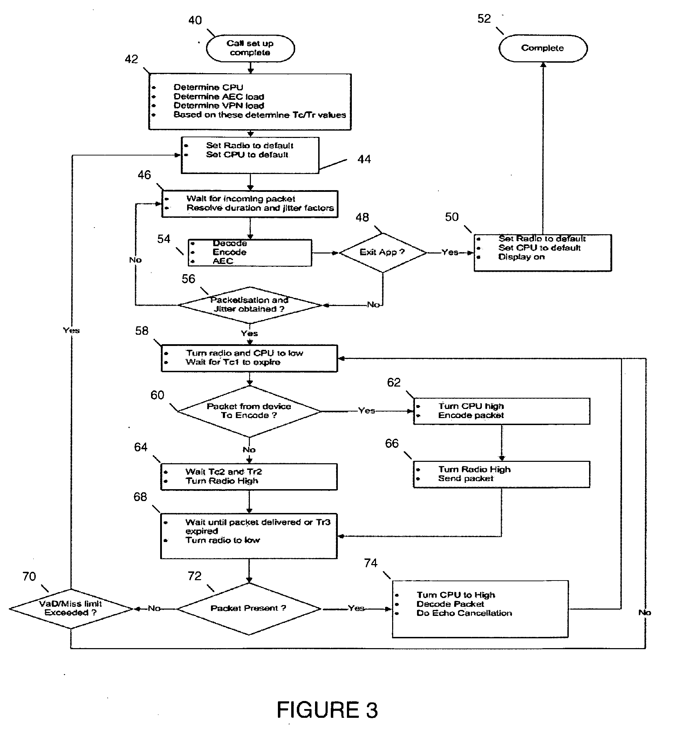

Figure 3 of the accompanying drawings shows schematically events and steps in a method of power management implemented by a communications application 18 for a communications device 10 according to an embodiment of the invention. The power management scheme requires an initial phase to be completed when a communications call (which comprises a real-time reception of streamed audio and/or video data from the remote party) to determine the packetisation and jitter rates of that particular communications call. Once these have been determined, the communications application 18 (which in the best mode of the invention currently contemplated by the inventor comprises a VoIP application) controls a plurality of the sub-systems of the communications device which it utilises in real-time to synchronise their operation with its own periods of activity (i.e. the sending and receiving of the data packets).

In Figure 3, the first event shown is the communications application 18 to completing a communication call set up phase (step 40). This step is performed in a conventional manner well known to those of ordinary skill in the art. This triggers the communication application 18 to determine the loading of the processing sub-system (CPU) (16) by any of the other device sub-systems or communication application components which are required to support the communications call (step 42). For example, implementing the CODEC component 24 and acoustic echo cancellation component (AEC) 26 results in a load on the processing sub-system 16. In addition, in one embodiment of the invention, the implementation of a virtual private network (VPN) scheme results in an additional load on the processing sub-system 16.

The total level of load on the processing sub-system 16 (for example, the sum of the loading from the CODEC, AEC and VPN functions implemented by the VolP application) must be known if the communication application 18 is to determine the synchronisation time periods for each loading sub-system whose activity periods are to be synchronised during the call (for example, to synchronise the radio sub-system 14 and processing sub-systems 16 (Tc/Tr).

The communications application 18 then sets one or more of these sub-systems to a default operational power value (step 44) and then waits for a sufficient number of packets to be received to determine the timing of an appropriate activity period which takes into account any jitter factors (step 46).

Until the packetisation and jitter have been determined (step 56), the sub-systems controlled by the VolP application remain at their default operational values (i.e., no power management is implemented according to the invention). Instead, the communications application performs the normal appropriate encoding (on packets to be transmitted) and decoding (on packets received) and any necessary echo cancellation (step 54). If the call terminates before the jitter and packetisation rates are obtained, the sub-systems remain at their default operational power levels and the display sub-system 12 of the communications device 10 remains active. The communication application 18 then exits at step 52.

If the communications call continues and the application 18 does not exit, each time a packet is received a check is performed to determine if the packetisation rate and jitter values have been determined (step 56), and if not the communications application 18 returns to step 46. At some point, however, the packetisation rate (the number of audio samples that are grouped together for transmission over the network, will be determined as will the jitter rate. This enables the application 18 to determine the appropriate timing intervals to synchronise the active (operational) periods of the relevant sub-systems/components required to support the communications call with its own periods of activity sending and receiving packet(s).

If the jitter and packetisation rates are obtained in step 56, then the application 18 will control the operation of the sub-systems required for the communications call to continue (for example, the radio sub-system 14, the processor sub-system 16, and if the communications call requires other.media such a video communications call requires, then the display 12 is also activated), so that at this point they collectively adopt a low-power level activity configuration, and the application 18 then waits for the power period of the processing sub-system 16 to expire (step 58). At this point, the application 18 determines if a packet is to be sent by the device 10 which requires encoding prior to transmission. If so, the application 18 controls the operation of the sub-systems which are required to perform the encoding - i.e., the processing sub-system 16 has its activity level increased so that it matches the encoding activity (step 62). Once the packet has been encoded in step 62, the application 18 controls the operation of the radio sub-system of the communications device 10 so that this adopts a high-power activity level in order for the encoded packet to be transmitted.

If there is no packet to be encoded in step 60, then the application waits until a packet is expected to be received (i.e., after the expiry of the time periods TC2 and TR2 shown in Figure 2) and then activates the radio-subsystem to enable a packet to be received. The application 18 then waits for a packet to be delivered or the latest point of time at which a packet is expected (the expected time and any additional time possible from jitter), and which point the radio sub-system is returned to a low-power condition (step 68).

If a packet has not been received at step 72, then the application 18 determines if a preconfigured number of packets have been missed, i.e., has the VAD/MISS limit shown in Figure 3 been exceeded? (step 70). If the limit has been exceeded then the application returns to step 44, i.e., the communications device sub-systems which the communications application 18 uses to perform its own operation are reset to a default operational level until the communications application 18 can determine the packetisation rate and jitter and so resynchronise the sub-systems' activity intervals with its own its own intervals of transmission and reception activity.

If the VAD/Miss limit has not been exceeded, then the application sets the sub-systems to a low power condition and waits for the low power period of the processing sub-system to expire (i.e. the method returns to step 56).
If a packet has been received in step 72, then the communications application 18 resets the processing sub-system to adopt a high-power configuration in order to enable the received packet to be decoded and for echo cancellation to be performed (step 74).

Modifications to the above features of the invention and features having equivalent effect to the features known to those skilled in the art are implicitly included in the description, and the scope of the invention should be determined by the accompanying claims.

## Claims

1. A method of power management for a communications device comprising a plurality of sub-systems, one or more of said sub-systems being interfaced with in real-time by a communications application which controls the communication of data packets sent to and from the communications device, the method comprising:
determining timing information for when the communications application performs one or more activities associated with the communication of data packets during operation of the communications application; and
controlling the operation of each of said sub-system in real-time to synchronise the time of activity of each of said sub-systems with the time of activity of said communications application when performing said one or more activities.

2. A method as claimed in claim 1, wherein said communications application comprises an application to transmit and/or receive packetised data comprising Voice-over-Internet Protocol communications traffic and wherein said wherein said communication of data packets comprises a Voice over IP communications call.

3. A method as claimed in claim 1 or 2, wherein the one of more activities comprise sending one or more data packets and/or receiving one or more data packets of said communication.

4. A method as claimed in any previous claim, wherein said step of determining timing information comprises determining a packetisation rate for said communication.

5. A method as claimed in claim 4, wherein said step of determining timing information further comprises determining a jitter rate for said communication.

6. A method as claimed in any previous claim, wherein in said step of controlling the operation of a sub-system, said sub-system adopts a low-power configuration when said communications application is not performing said one or more activities during a period of operation of said communications application.

7. A method as claimed in any previous claim, wherein in said step of controlling the operation of a sub-system, said sub-system adopts an operational power configuration when said communications application is performing said one or more activities during a period of operation of said communications application.

8. A method as claimed in any previous claim, wherein in said step of controlling the operation of a sub-system, said sub-system defaults to an operational power configuration if said communications application exits its operation.

9. A method as claimed in any previous claim, wherein one or more of said plurality of sub-systems of the communications devices are synchronised to adopt a low-power configuration when there is no transmission or reception of packetised data by said communications application and wherein said plurality of sub-systems are synchronised to adopt a high-power configuration during transmission or reception of packetised data by said communications application.

10. A method as claimed in any previous claim, wherein at least one sub-system comprises a radio sub-system of the communications device whose operation is controlled so that the power consumption of the radio sub-system during operation of said communications application is controlled.

11. A method as claimed in any previous claim, wherein at least one sub-system comprises a processing sub-system of the communications device whose operation is controlled so that the power consumption of the processing sub-system during operation of said communications application is controlled.

12. A method as claimed in any previous claim, wherein additionally said communications application controls the power configuration of a display sub-system of said communications device so that this adopts a low-power configuration during the period of operation of the communications application.

13. A communications device arranged to implement steps in the method of any one of claims 1 to 12.

14. A computer readable medium carrying program steps comprising a communications application, which when said program steps are executed on a communication device according to claim 13, causes the communication device to carry out appropriate steps in the methods of any of claims 1 to 12.
